# EUROPEAN PATENT SPECIFICATION

(11) **EP 0 556 767 B1**
(45) Date of publication and mention of the grant of the patent: **12.06.1996**
(21) Application number: 93102378.2
(22) Date of filing: 16.02.1993
(51) Int. Cl.: B29C 70/00, B29C 65/64

(54) **Metallic insert, particularly for connectors**
Metallischer Einsatz, insbesondere für Verbindungsstücke
Insert métallique, notamment pour organes de liaison

(30) Priority: 20.02.1992 IT VI920026
(43) Date of publication of application: 25.08.1993
(73) Proprietor: Mastromatteo, Ciro, I-36043 Camisano Vicentino (VI) (IT)
(72) Inventor: Mastromatteo, Ciro, I-36043 Camisano Vicentino (VI) (IT)
(74) Representative: Forattini, Amelia

(56) References cited:
- EP-A- 0 113 308
- EP-A- 0 273 515
- EP-A- 0 461 308
- DE-A- 2 030 422
- PLASTVERARBEITER vol. 42, no. 9, September 1991, SPEYER pages 60-66 P. FREITAG Metallaische Gewindeeinsätze für Thermo- und Duroplaste

## Description

The present invention relates to a metallic insert particularly for connectors of the kind normally used to connect pipes of hydraulic systems.

Metallic inserts are known which include an essentially tubular body with an internally or externally threaded portion and are provided with an anchoring means to lock the insert within an external matrix made of plastic material; the matrix generally has a cylindrical shape and is injected in a cavity formed between a male mold and a female mold in which the metallic insert is positioned beforehand. The connector thus obtained is flexible but has rigid end portions such as to ensure mechanical strength and hydraulic tightness. Inserts are normally obtained starting from metallic bars or pipes which are subsequently machined at the internal surface and at the external surface by turning and/or milling.

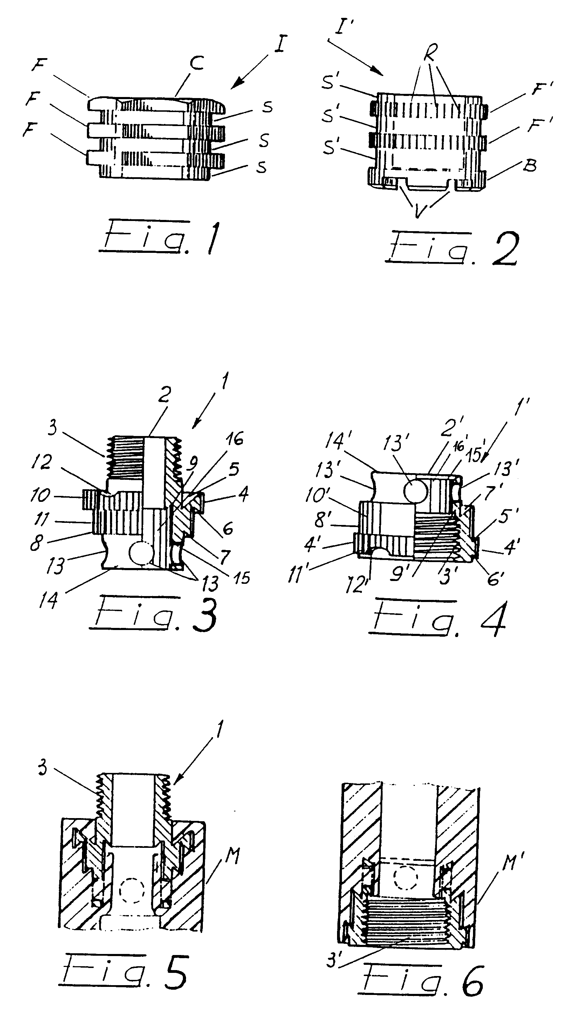

Figures 1 and 2 illustrate two examples of embodiments of inserts according to the prior art. The metallic insert of Figure 1, generally designated by the reference letter I, is constituted by a hollow body C obtained from a hexagonal bar, on the outer surface of which cylindrical grooves S are produced; the grooves form anchoring flanges F with a faceted external profile. By virtue of this particular configuration, the metallic insert I has excellent resistance to extraction and rotation with respect to the plastic matrix of the connector, but also has the drawback of causing local weak points in the matrix and, in case of overheating of the connector, expansions which differ from point to point, with consequent loosenings and progressive losses of tightness.

The metallic insert I' of Figure 2 is produced starting from a cylindrical bar on the outer surface of which cylindrical grooves S' are formed. The grooves are such that they create, on the outer surface, annular protrusions F' provided with longitudinal channels R. Transverse notches V are produced along a front end edge B so as to increase the resistance of the matrix to torsional stresses. This second type of insert eliminates many of the drawbacks of the first type of Figure 1, since it does not have the disadvantage of differential expansion and of variation in the thickness of the plastic matrix. However, even this insert, like the first one, has the drawback of an excessive manufacturing cost caused by the large number of rather complicated and long machining steps as well as by the significant waste of raw material, with negative consequences in environmental terms.

From EP-A-0 461 308 are known inserts of the above mentioned types which include all the features of the invention defined in the preamble of claim 1.

The aim of the present invention is to eliminate the drawbacks described above by providing a metallic insert which has characteristics of high functionality combined with an extremely low cost and a lower environmental impact.

This aim is achieved by a metallic insert according to claim 1.

The rotation-preventing means may be constituted by longitudinal channels or protrusions formed on the internal and external cylindrical surface during pressing, or by front recesses or indents formed on the peripheral edges of annular flanges arranged on the tubular body. The extraction-preventing means may include truncated-cone dovetail grooves oriented in both directions and formed along the internal and external walls of the tubular body during pressing.

The rotation-preventing means may comprise further cavities and/or through holes formed on the walls of the semimachined tubular body by subsequent removal of material. The internal and external threads are naturally produced with conventional methods on the semimachined tubular body, reducing mechanical machining to a minimum. The metallic insert according to the invention has the advantage of uniform pulling strength and resistance to torsional stress with respect to the plastic matrix of the connector, combined with great simplicity and low manufacturing cost. It furthermore entails a minimal waste of raw material and energy and is accordingly cheaper and more ecological.

The metallic insert is subjected to sandblasting in order to increase the roughness of the surfaces embedded in the plastic, to increase grip, and to a final nickel-plating treatment in order to reduce the formation of oxides between the metal and the plastic.

Further characteristics and advantages of the present invention will become apparent from a description of some embodiments of the metallic insert according to the invention, illustrated only by way of non-limitative example in the accompanying drawings, wherein:
Figures 1 and 2 are views of two embodiments of inserts of the prior art;
Figure 3 is a partially sectional view of a male insert with an external thread according to the invention;
Figure 4 is a partially sectional view of a female insert with an internal thread according to the invention;
Figures 5 and 6 are views of the inserts of Figures 3 and 4 respectively, embedded in end portions of connectors made of plastic material.

With reference to Figures 3 to 6, a male metallic insert is generally designated by the reference numeral 1 and a female insert is designated by the reference numeral 1'. The inserts 1, 1' respectively comprise a main body 2, 2' which has a substantially tubular shape and is provided with respective external and internal threads 3, 3' and with standard diameters, pitches and characteristics.

Each tubular body 2, 2' has means for anchoring to a plastic matrix M, M', which anchoring means comprises extraction-preventing means and rotation-preventing means which are mainly produced directly during hot-pressing.

In particular, the tubular body 2, 2' may have an annular portion 4, 4' which has a maximum diameter, wherein the front edge is provided with truncated-cone grooves 5, 5', 6, 6' which have for example a dovetail profile. Similar truncated-cone grooves 7, 7' may be defined in another annular edge of a smaller-diameter cylindrical region 8, 8' of the outer surface of the tubular body 2, 2'.

A further truncated-cone groove 9, 9' may similarly be provided on the internal wall of the tubular body 2, 2' as well. The purpose of these dovetail parts is to wedge in the plastic matrix, contrasting the axial sliding of the insert.

The rotation-preventing means may be constituted by longitudinal channels 10, 10', 11, 11' formed on the outer cylindrical portions 4, 4', 8, 8', by longitudinal channels 15, 15' formed in the internal cylindrical portions 16, 16', as well as by recesses or indents 12, 12' formed along the front edge of the annular parts 4, 4'. All the means described so far are obtained directly by hot-pressing on the tubular body 2, 2' without any further mechanical machining, by means of corresponding shapes on the pressing dies.

A further rotation-preventing means may be constituted by transverse through holes 13, 13', arranged for example in the shape of a cross in an end portion 14, 14' of the tubular body 2, 2'.

As shown in Figures 5 and 6, the injected plastic matrix M, M' penetrates in these holes, ensuring considerable resistance not only to rotation but also to axial traction. Naturally, the holes 13, 13' are produced by conventional machining operations with mechanical, manual or automatic chip-forming.

The threads 3, 3' are obviously produced on the semimachined component 2, 2' by means of conventional manual or automatic machining operations. The raw materials of the metallic insert may be brass, bronze and other ferrous or non-ferrous alloys.

It is stressed that the main bodies 2, 2', after being hot-pressed, are preferably subjected to a sandblasting treatment in order to increase the roughness of their surfaces embedded in the plastic, to provide greater grip, and to a final nickel-plating treatment to reduce the forming of oxide between the metal and the plastic.

It has been observed that metallic inserts of the above described type achieve the intended aim and objects, and in particular are functionally effective and extremely economical due to their reduced manufacturing time and to the considerable saving in raw material. The metallic inserts according to the invention are susceptible to numerous modifications and variations, all of which are within the scope of the inventive concept defined in the accompanying claims. All the details and the materials may be replaced with technically equivalent ones without abandoning the scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A metallic insert, particularly for connectors, comprising a cylindrical tubular body (2, 2') suitable to be embedded into a plastic matrix (M, M') so as to form with said matrix a connector, said tubular body (2, 2') having a threaded end portion (3, 3') and an anchoring means which includes means preventing extraction and means preventing rotation of the tubular body (2, 2') with respect to the matrix (M, M'), characterized in that said tubular body (2, 2') is a semimachined component obtained by hot-pressing, either one or both of said extraction-preventing means and said rotation-preventing means being directly formed on said tubular body during hot-pressing thereof without any further machining.

2. Metallic insert as claimed in claim 1, wherein said rotation-preventing means comprises a series of substantially longitudinal channels or protrusions (10, 10'; 11, 11'; 15, 15') formed on the internal cylindrical surface (16, 16') and on the external cylindrical surface (4, 4'; 8, 8') of said tubular body (2, 2') during hot-pressing thereof.

3. Metallic insert as claimed in claim 1, wherein said rotation-preventing means comprises one or more recesses or indents (12, 12') formed on the front edge of a cylindrical portion (4, 4') of said tubular body (2, 2').

4. Metallic insert as claimed in claim 2 or 3, wherein said rotation-preventing means further comprises a plurality of through holes (13, 13') drilled on the end portion (14, 14') of the cylindrical wall of said tubular body (2, 2').

5. Metallic insert as claimed in claim 1, wherein said extraction-preventing means comprises dovetail axial cylindrical edges (5, 6, 7, 9; 5', 6', 7', 9') formed on the internal and external walls of said tubular body (2, 2') during hot-pressing thereof and are oriented in axially opposite directions.

6. Metallic insert as claimed in claim 1, wherein said semimachined hot-pressed tubular body (2, 2') is made of a metallic material such as brass, bronze, iron and other alloys.

## Patentansprüche

1. Metallischer Einsatz, insbesondere für Verbindungselemente, bestehend aus einem zylindrischen röhrenförmigen Körper (2, 2'), der zum Einbetten in eine Kunststoffmatrix (M, M') geeignet ist, um mit der Matrix ein Verbindungselement zu bilden, wobei der röhrenförmige Körper (2, 2') einen mit einem Gewinde versehenen Endbereich (3, 3') und eine Verankerungsvorrichtung aufweist, welche Elemente zur Verhinderung von Extraktion und Elemente zur Verhinderung von Rotation des röhrenförmigen Körpers (2 2') gegenüber der Matrix (M, M') aufweist, **dadurch gekennzeichnet,**
daß der röhrenförmige Körper (2, 2') ein durch Warmpressen erzeugtes Halbfabrikat ist, wobei wenigstens eines oder beide der genannten extraktions-verhindernden und rotations-verhindernden Einheiten am röhrenförmigen Körper während des Warmpreßverfahrens ohne weitere spanabhebende Nachbearbeitung ausgebildet sind.

2. Metallischer Einsatz nach Anspruch 1, dadurch gekennzeichnet, daß die rotations-verhindernden Einrichtungen eine Reihe von im wesentlichen längsverlaufenden Kanälen oder Vorsprüngen (10, 10'; 11, 11'; 15, 15') umfassen, die auf der inneren zylindrischen Oberfläche (16, 16') und der äußeren zylindrischen Oberfläche (4, 4'; 8, 8') des röhrenförmigen Körpers (2, 2') durch das Warmpreßverfahren gebildet sind.

3. Metallischer Einsatz nach Anspruch 1, dadurch gekennzeichnet, daß die rotations-verhindernden Einrichtungen eine oder mehrere Vertiefungen oder Kerben (12, 12') umfassen, die in der Stirnkante eines zylindrischen Bereiches (4, 4') des röhrenförmigen Körpers (2, 2') gebildet sind.

4. Metallischer Einsatz nach einem der Ansprüche 2 oder 3, dadurch gekennzeichnet, daß die rotations-verhindernden Einrichtungen weiterhin eine Vielzahl von Durchgangslöchern (13, 13') umfassen, die in den Endbereich (14, 14') der zylindrischen Wandung des röhrenförmigen Körpers (2, 2') gebohrt sind.

5. Metallischer Einsatz nach Anspruch 1, dadurch gekennzeichnet, daß die extraktions-verhindernden Einrichtungen schwalbenschwanzförmige axiale zylindrische Kanten (5, 6, 7, 9; 5', 6', 7', 9') umfassen, die auf den inneren und äußeren Wandungen des röhrenförmigen Körpers (2, 2') während des Warmpreßverfahrens gebildet und in axial entgegengesetzten Richtungen ausgerichtet sind.

6. Metallischer Einsatz nach Anspruch 1, dadurch gekennzeichnet, daß der im Warmpreßverfahren als Halbzeug hergestellte röhrenförmige Körper (2, 2') aus einem metallischem Material wie Messing, Bronze, Eisen oder anderen Legierungen gebildet ist.

## Revendications

1. Insert métallique, notamment pour raccords, comprenant un corps tubulaire cylindrique (2,2') convenant pour être enveloppé par une matrice (M,M') en matière plastique de manière à former avec ladite matrice un raccord, ledit corps tubulaire (2,2') comportant une partie d'extrémité filetée (3,3') et un moyen d'ancrage qui comprend un moyen empêchant une extraction et un moyen empêchant une rotation du corps tubulaire (2,2') par rapport à la matrice (M,M'), caractérisé en ce que ledit corps tubulaire (2,2') est un composant semi-usiné obtenu par pressage à chaud, ledit moyen empêchant l'extraction ou ledit moyen empêchant la rotation ou ces deux moyens étant formés directement sur ledit corps tubulaire pendant le pressage à chaud de ce dernier, sans usinage supplémentaire.

2. Insert métallique selon la revendication 1, dans lequel ledit moyen empêchant la rotation comprend une série de rainures ou de reliefs sensiblement longitudinaux (10,10' ; 11,11' ; 15,15') formés sur la surface cylindrique intérieure (16,16') et sur la surface cylindrique extérieure (4,4' ; 8,8') dudit corps tubulaire (2,2') pendant le pressage à chaud de ce corps.

3. Insert métallique selon la revendication 1, dans lequel ledit moyen empêchant la rotation comprend un ou plusieurs renfoncements ou creux (12,12') formés sur le bord avant d'une partie cylindrique (4,4') dudit corps tubulaire (2,2').

4. Insert métallique selon la revendication 2 ou 3, dans lequel ledit moyen empêchant la rotation comprend en outre une pluralité de trous traversants (13,13') percés dans la partie d'extrémité (14,14') de la paroi cylindrique dudit corps tubulaire (2,2').

5. Insert métallique selon la revendication 1, dans lequel ledit moyen empêchant l'extraction comprend des bords cylindriques axiaux en queue d'aronde (5, 6, 7, 9 ; 5', 6', 7', 9') formés sur les parois intérieure et extérieure dudit corps tubulaire (2,2') pendant le pressage à chaud de ce corps et sont orientés dans des directions axiales opposées.

6. Insert métallique selon la revendication 1, dans lequel ledit corps tubulaire (2,2') pressé à chaud et semi-usiné est réalisé en un matériau métallique tel que du laiton, du bronze, du fer et d'autres alliages.
